# EUROPEAN PATENT APPLICATION

(11) **EP 1 291 178 A1**
(43) Date of publication of application: **12.03.2003**
(21) Application number: 02250943.4
(22) Date of filing: 12.02.2002
(51) Int. Cl.: B41F 31/30, B41F 13/26, F16D 1/033

(54) **A device and method for removably mounting a cylinder in an apparatus**

(30) Priority: 10.09.2001 US 950125
(71) Applicant: WARD HOLDING COMPANY, INC., Wilmington, Delaware 19805 (US)
(72) Inventor: Elkis, Michael, Columbia, Maryland MD21045 (US); Donovan, Mark R., Severn,Maryland MD21144 (US); Ward, William, Teton Village, Wyoming WY83025-0821 (US)
(74) Representative: Lucas, Brian Ronald

(57) **Abstract**

In or for use in an apparatus, a device for removably mounting a cylinder, which device comprises:
a first support (12; 52) for connection to a cylinder (10) ;
a second support (24; 54) integral with, or adapted to be secured to, a journal (20) in said apparatus; and
a connecting means (44; 64, 78) for removably connecting said first support (12; 52) to said second support (24; 54), the arrangement being such that, in use, said connecting means (44; 64, 78) can be released to permit said first support (12; 52) to be removed from and inserted into said apparatus whilst said second support (24; 54) remains mounted thereon.

## Description

This invention relates to a device and method for mounting a cylinder in an apparatus, and more particularly but not exclusively to such a device for mounting a cylinder in an apparatus for printing. The device of the invention is not limited to use in the field of printing. It may be used in any apparatus or machine in which a cylinder is mounted, for example a crushing or grinding mill. There is also provided a cylinder having one part of the device and apparatus for printing having another part of the device.

In rotary printing, such as in flexographic printing of multi-coloured images, it is well known that different ink rolls having different surface configurations must be used to print most clearly in different situations. For example, so-called "high line-count" ink rolls are required for high or detailed graphics, while "low line-count" ink rolls are required for solid colour or so-called "block" printing. This is particularly true when printing on sheets of corrugated cardboard so as to form advertising displays, or containers for many different products. In flexographic printing, aqueous inks are used, and the ink rolls are sometimes referred to as "anilox rolls".

As a result of the above-indicated requirements, it is very frequently necessary to remove one ink roll of a certain line-count and replace it with another ink roll of a different line-count before beginning the next run of sheets to be printed. In the past, the removal and replacement of ink rolls has taken many hours and has resulted in substantial losses of production. For example, the ink roll is closely surrounded by other structures such as the ink fountain and the printing cylinder, as well as the train of drive gears in a multistage printing machine. Thus, it has been necessary to disassemble many components of the machine in order to free the ink roll and its one-piece journal so as to remove it from the machine. In addition, each ink roll may be in the order of 3.05m (10 feet) in length, and may weigh 680kg (1,500 pounds) or more, which further complicates the removal and replacement process, and results in many hours of down time for the operator.

The present invention aims to alleviate aforementioned difficulty.

According to one aspect of the present invention there is provided in or for use in an apparatus, a device for removably mounting a cylinder, which device comprises:
a first support for connection to said cylinder;
a second support integral with, or adapted to be secured to, a journal in said apparatus; and
a connecting means for removably connecting said first support to said second support, the arrangement being such that, in use, said connecting means can be released to permit said first support to be removed from and inserted into said apparatus whilst said second support remains mounted thereon.

It should be understood that, in some embodiments, two devices in accordance with the present invention are used to releasably mount a cylinder in an apparatus, one used at either end of the cylinder when mounted on the apparatus.

Preferred embodiments of the present invention enable quick and easy removal and replacement of ink rolls and other cylinders by providing mounting structures that, in one embodiment, are vertically split. A two-piece ink roll and journal structure enables the ink roll to be separated from the journal, thereby allowing the journal to remain mounted in the apparatus for printing while only the ink roll or cylinder is removed and replaced.

The apparatus may be an apparatus for printing which includes a printing machine and/or a processing section therefor. Cylinders used in such apparatus may be ink rolls, feed rolls, die cutter cylinders, impression cylinders, or any cylinders used in a printing section or a processing section located at a pre or post printing stage.

It will be appreciated that many other types of machinery utilise rollers that must be changed at various times. The present invention can also be used with such machinery.

Preferably, said first support has a first surface and said second support has a second surface, the arrangement being such that, in use, said first and second surfaces are held substantially in abutment by said connecting means.

Advantageously, in use, on removal and insertion of said cylinder, said first and second surfaces are oriented in at least a substantially vertical plane. In use, this plane rotates with the cylinder about an axis lying in the plane. In many printing machines, rollers can only be removed and replaced in a substantially horizontal plane for practical reasons as mentioned above. By arranging the first and second surfaces in this way these operations are facilitated. An additional advantage of such an arrangement is that, during rotation of the cylinder, stress on the connecting means is reduced.

In one embodiment the axis of the cylinder lies in this plane.

Preferably, in use, said first and second surfaces abut in at least a substantially vertical plane. This plane remains substantially vertical whilst the cylinder rotates.

Advantageously said first support is adapted to accommodate at least a part of said second support. In one embodiment this helps to reduce the stress on the connecting means since torque is transferred directly from the second support to the first support, rather than indirectly via the connecting means as in other embodiments.

Preferably, said connecting means comprises a plate, in use, removably mounted both on said first support and on said second support.

In one embodiment the plate is sufficiently flexible to accommodate any deviation in the difference between the dimensions of the first and second supports beyond acceptable tolerance. In another embodiment a shim or shims may be used with the plate or flexible plate.

Advantageously, said connecting means comprises at least one bolt.

Preferably the device further comprises guide means to assist in locating said first support with respect to said second support in said apparatus.

In one embodiment the guide means comprises a housing adapted to be mounted via first bearing means on the journal of said apparatus.

Advantageously, said housing is mounted on said first support via second bearing means.

In one embodiment since the housing is mounted both on the journal and on the first support, it provides a centering function when a cylinder is inserted into the apparatus so that the longitudinal axis of the cylinder is substantially in alignment with the longitudinal axis of the journal before the connecting means is actuated. This saves valuable time in the set up process.

In one embodiment the housing is permanently secured to the apparatus for printing.

Preferably, the housing comprises a removable cover element providing access to said connecting means for operation thereof.

In one embodiment the housing substantially encloses the first and second supports.

According to another aspect of the present invention there is provided an apparatus comprising a device in accordance with the present invention.

According to another aspect of the present invention there is provided for use with an apparatus, a first support having any of or any combination of any of the first support features of the device.

In one embodiment the first support is part of a cylinder.

According to another aspect of the present invention there is provided for use with an apparatus, a second support having any of or any combination of any of the second support features of the device.

According to another aspect of the present invention there is provided a method of removably mounting a cylinder in an apparatus, for example an apparatus for printing, which method comprises the steps of:
(1) affixing a first support to said cylinder;
(2) affixing a second support to a journal or providing a journal with a second support thereon;
(3) emplacing the first support and cylinder into said apparatus, said second support already mounted thereon; and
(4) releasably connecting said first and second supports with connecting means.

Advantageously, to remove the cylinder the method further comprises the steps of:
(5) releasing said connecting means; and
(6) removing said first support and said cylinder from said apparatus whilst said second support remains mounted on said apparatus.

According to another aspect of the present invention there is provided an apparatus, for example an apparatus for printing, comprising a frame having a pair of journals mounted thereon, the apparatus being such that a cylinder can be mounted on and removed from said frame without removing said pair of journals therefrom.

According to another aspect of the present invention there is provided a mounting system for removably mounting an ink roll in a printing machine comprising:
(a) an ink roll;
(b) an ink roll support permanently secured to said ink roll;
(c) a journal;
(d) means permanently connecting said journal in the printing machine; and
(e) a connector assembly removably connecting said journal to said ink roll for removing said ink roll from the machine and leaving said journal connected to the machine.

Preferably, the mounting system includes an annular housing surrounding said journal and including a bearing between said journal and said annular housing.

Advantageously there is a bearing between said ink roll support and said annular housing.

Preferably, said connector assembly comprises at least one plate removably secured to said journal and to said ink roll support.

Advantageously, said at least one plate is removably secured by bolts to said journal and said ink roll support.

Preferably, said annular housing is permanently connected to said printing machine.

Advantageously, the annular housing comprises at least one removable cover element for gaining access to said at least one removable plate.

According to another aspect of the present invention there is provided a mounting system for removably mounting a roller in a machine comprising:
(a) a roller;
(b) a support member permanently secured to said roller;
(c) a journal permanently secured in the machine;
(d) said journal having an end portion adjacent an end portion of said support member;
(e) an annular housing surrounding said journal;
(f) a connector assembly removably connecting the end of said journal portion to the end of said support member for removing said roller from the machine with said journal secured to said machine; and
(g) wherein said connector assembly comprises at least one plate removably bolted to said journal and to said roller support.

Preferably, the mounting system comprises a bearing between said journal and said annular housing.

Advantageously, the annular housing extends over an end portion of said support member, and including a bearing between said housing and said end portion of said support member.

Preferably, said end portion of said journal and said end portion of said support member each have planar surfaces which are bolted together by said plate.

According to another aspect of the present invention there is provided a mounting system for removably securing a cylinder in a printing machine comprising:
(a) a journal having an end portion permanently mounted in said printing machine;
(b) a first adapter permanently secured to said end portion of said journal;
(c) an elongated cylinder having a longitudinal axis and at least one end portion;
(d) a second adapter secured to said end portion of said cylinder;
(e) each of said first and second adapters having mating surfaces; and
(f) connector means for removably connecting said first and second adapters.

Advantageously, said mating surfaces extend in a plane substantially parallel to and including said longitudinal axis.

Preferably, said connector means comprise bolts extending tangentially through said first and second adapters.

For a better understanding of the present invention reference will now be made, by way of example, to the accompanying drawings in which:
FIG. 1 is a side cross-section of a first embodiment of a device in accordance with the present invention in use with an ink roll and printing machine, only part of which are shown;
FIG.1A is an enlarged view of part of the connecting means of the device in FIG. 1;
FIG. 2 is a perspective view of the device of Fig. 1 in use with an ink roll and journal, shown partly assembled;
FIG. 3 is an end cross-section of the device of Fig. 1 in use with an ink roll;
FIG. 3A is an end cross-section of an alternative connection means of the device of Fig. 1;
FIG. 4 is an exploded perspective view of a second embodiment of a device in accordance with the present invention in use with an ink roll and journal, only part of which are shown;
FIG. 5 is a perspective view of the orientation of the device in Fig. 4 during assembly and disassembly, together with the journal and part of the ink roll; and
FIG. 6 is a perspective view of the device of Fig. 4 fully assembled.

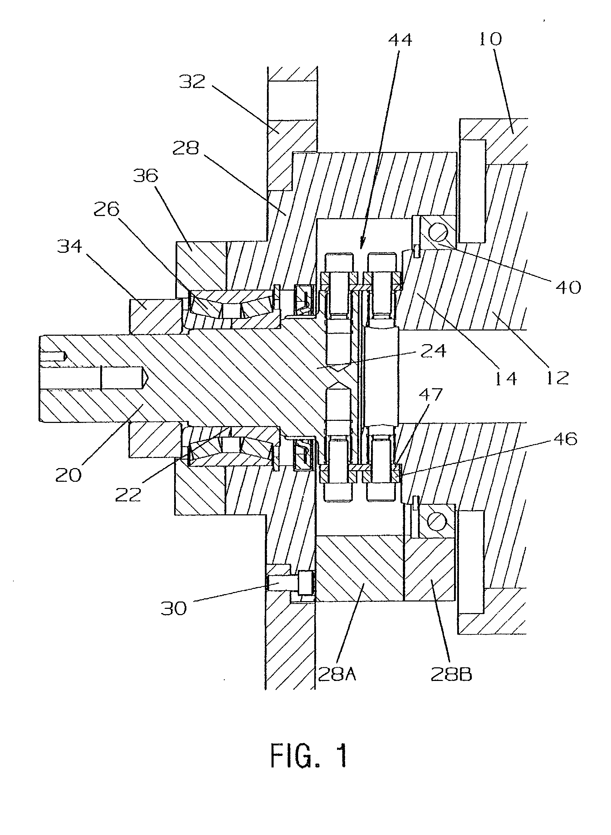

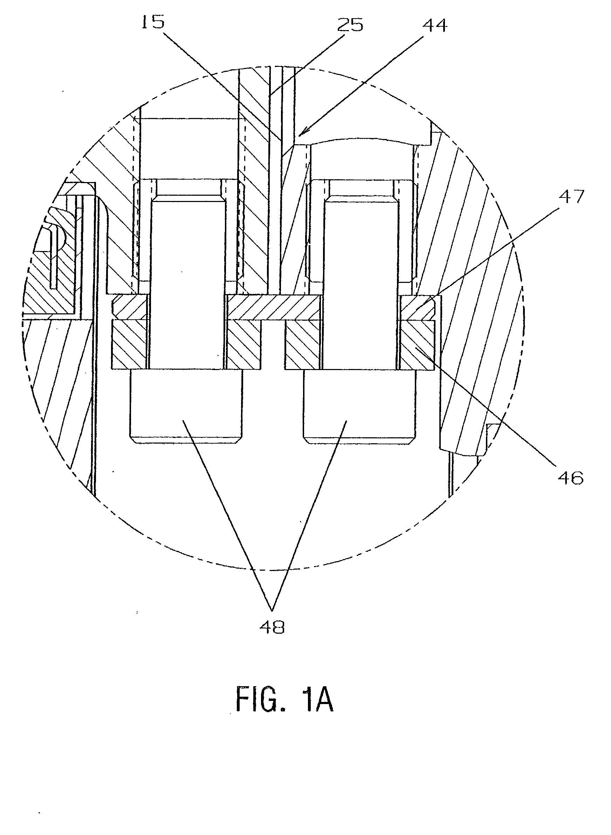

Referring first to the embodiment shown in FIGS. 1 - 3, numeral 10 indicates an ink roll that is permanently secured to an internal support 12 such as by a force-fit or welding or other means. Support 12 includes a portion 14 of reduced diameter, and it will be understood that elements 10, 12 and 14 form a one-piece ink roll which remains an integral unit when the ink roll is installed or removed from the machine.

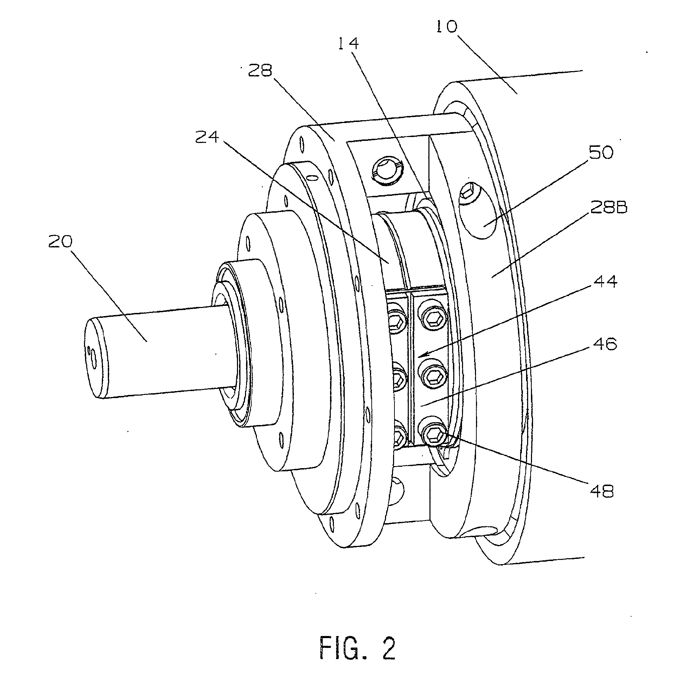

As shown most clearly in the left portions of FIGS. 1 and 2, a journal 20 extends to the right toward the ink roll. Journal 20 includes a slightly enlarged bearing surface portion 22, and a substantially enlarged flange portion 24. The journal is centred by a radial-and-thrust bearing 26 which is mounted in guide means comprising an annular housing 28. Housing 28 is connected by bolts 30 or otherwise to an inner frame member 32 or to another stationary and permanently mounted structure of the printing machine. Bearings 26 are preferably retained in place by a retention ring 34 and an annular retainer ring 36, and it will be understood that a drive pulley or sprocket (not shown) is mounted on the end of journal 20 in order to rotate the ink roll.

Referring to the right-hand portion of FIG. 1, it will be noted that a second set of radial bearings 40 are contained in and centred by housing 28, and that bearings 40 surround reduced diameter portion 14 of the ink roll. Thus, both the ink roll 10 and journal 20 are mounted in and centred by housing 28. This assists alignment between the journal and the ink roll being removed, and between the journal and the new ink roll being introduced into the machine. It will also be noted from FIGS. 1 - 3 that housing 28 extends 180° around the centre of revolution and longitudinal axis of the ink roll, and that the other 180° is enclosed by removable semi-circular covers 28A and 28B.

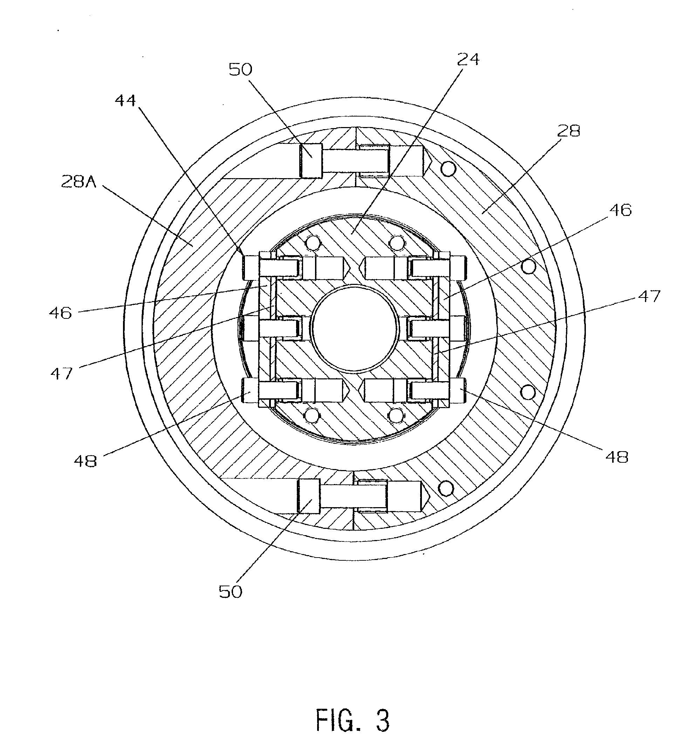

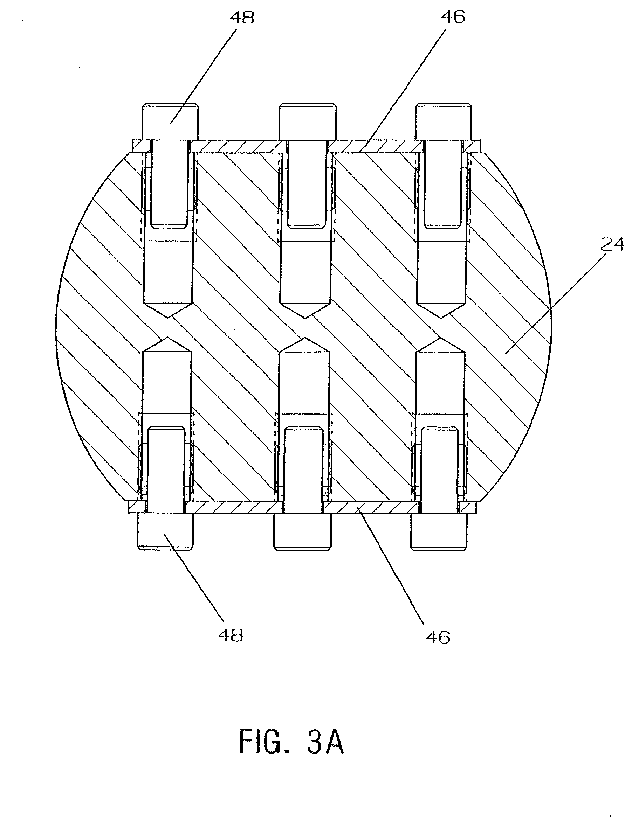

In order to removably connect each ink roll to the journal, flange 24 of the journal and reduced diameter portion 14 of internal support 12 are connected by removable connector assemblies 44 as illustrated in FIGS. 1 - 3. In one preferred embodiment, connector assemblies 44 comprise plates 46 and 47 bolted to both journal flange 24 and portion 14 of the ink roll by removable bolts 48. Plates 46 are relatively thick and rigid, whereas plates 47 are thinner and sufficiently flexible so as to compensate for any deviations in the matching dimensions of portions 14 and 24 beyond preset tolerances. Alternatively, shims may be employed instead of flexible plate 47. If the tolerances of portions 14 and 24 are maintained, such as by precision machining, then the flexible plates and shims may be eliminated as illustrated in FIG. 3A. In this embodiment, plates 46 alone bridge across journal portion 24 and reduced diameter portion 14 of ink roll support 12 and removably connect the ink roll to the journal. In either case, it will be understood that the end surface 15 of support portion 14 and the end surface 25 of journal flange 24 form mating planar surfaces as shown in FIGS. 1 and 1A, and that the bolt and plate assemblies 44 bridge these mating surfaces and removably secure journal 20 to the ink roll.

When it is desired to change ink rolls, bolts 50 are removed, and semi-circular cover 28A is removed. This provides direct access to bolts 48 as shown in FIG. 2 such that plates 46 may be removed. Removal of plates 46 disconnects journal flange 24 from reduced portion 14 of the ink roll. The ink roll is then supported temporarily, by a support structure (not shown), while cover 28B is removed. The ink roll is then removed, such as sideways to the left as viewed in FIG. 3 i.e. substantially horizontally. The second set of radial bearings 40 remain mounted on the reduced diameter portion 14 of the ink roll during removal. The present invention makes it possible to remove an ink roll in only the time that it takes to remove bolts 50 and 48, and slide the ink roll horizontally out of the machine. The required time for this removal is substantially less than one hour, whereas, prior mounting systems have required many hours to remove each ink roll. It will also be understood that the same mounting structure may be used to make printing cylinders, feed rolls, impression cylinders, die cutter cylinders and other rotary components of a printing machine easily removable and replaceable, as well as the cylinders of other types of machines.

On replacement of the ink roll 10 or emplacement of a new ink roll in the machine it will be noted that the housing 28 provides a guiding and centring function for the ink roll with respect to the journal 20. Bearings 40, mounted on the internal support 12, are guided by the extremity of the housing 28 substantially into the position shown in Fig. 1. Thus the longitudinal axis of the ink roll 10 is quickly aligned with the longitudinal axis of the journal, enabling a user to reassemble the connecting means 44 without delay aligning the necessary components.

It should be noted that there is a similar arrangement to that described above at the other end of the ink roll and at the other side of the machine. What is described herein with reference to one end of the ink roll and one side of the machine is applicable to the other end and side, both in construction and method of operation.

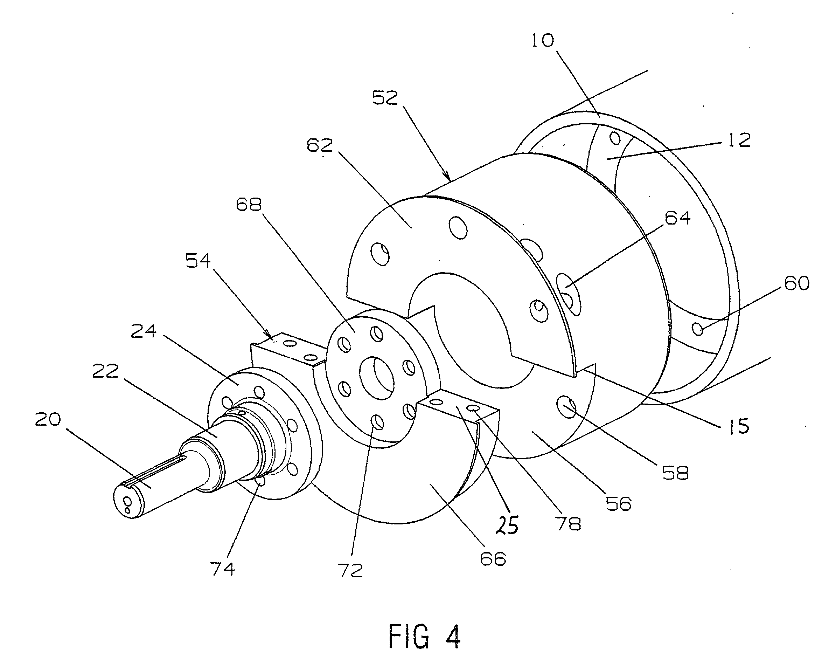

The present invention includes a second preferred embodiment as illustrated in FIGS. 4 - 6 in which the same numerals represent counterpart elements of the previous embodiment. The right-hand portion of FIG. 4 shows ink roll 10 with an internal support 12 which comprise a one-piece construction as previously described. The left-hand portion of FIG. 4 shows journal 20 with bearing surface 22 and an integral flange portion 24, and it will be understood that journal 20 is permanently connected to the machine as previously described. The middle portion of FIG. 4 illustrates an alternative adapter assembly comprising first and second adapters 52 and 54. Adapter 52 comprises a first circular portion 56 having a diameter equal to the inner diameter of the ink roll and having a mating surface 15. Portion 56 includes bolt holes 58 which are aligned with threaded bores 60 of ink roll support 12 so that adapter 52 may be semi-permanently bolted to the ink roll in precise alignment with the axis of rotation of the ink roll; the term semi-permanently being further defined hereafter.

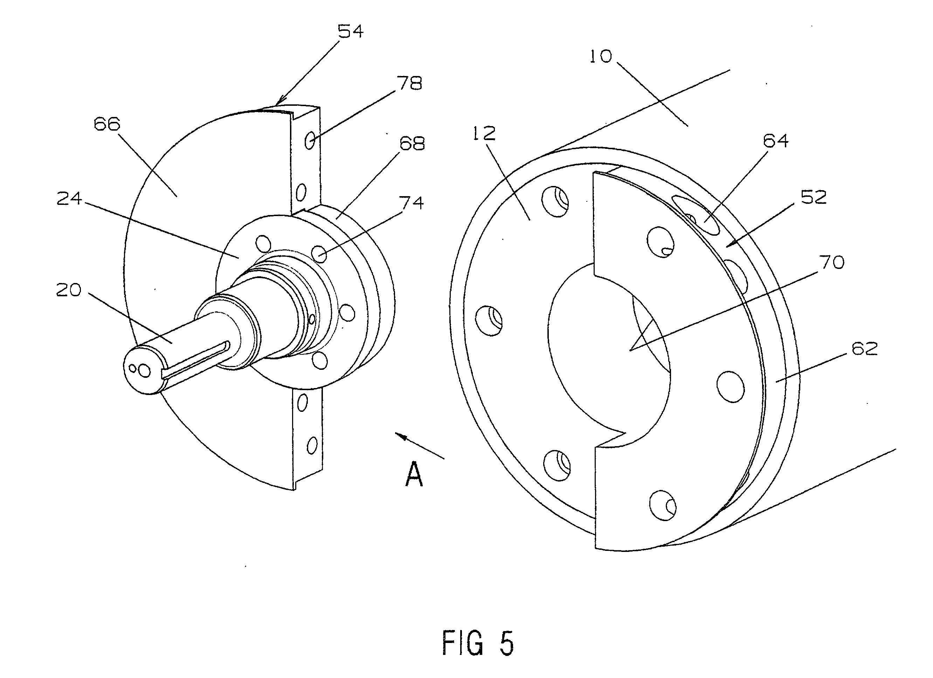

Adapter 52 includes an integral, arcuate portion 62 that extends 180° around the circumference of portion 56 of adapter 52. Arcuate portion 62 has an external diameter equal to the internal diameter of the ink roll, and includes angled bore holes 64 for receiving bolts tangentially. Thus, when adapter 52 is semi-permanently secured to the end of the ink roll, the assembly is as shown in the right-hand portion of FIG. 5.

As shown in the left portion of FIG. 4 and in FIG. 5, adapter 54 includes an arcuate portion 66 having a diameter equal to that of adapter portion 56 and having a mating surface 25. Adapter 54 also includes an integral, circular portion 68 having a circumference equal to the curvature 70 of portion 62 of adapter 52. Portion 68 is provided with bores 72 which may be aligned with bores 74 of journal flange 24.

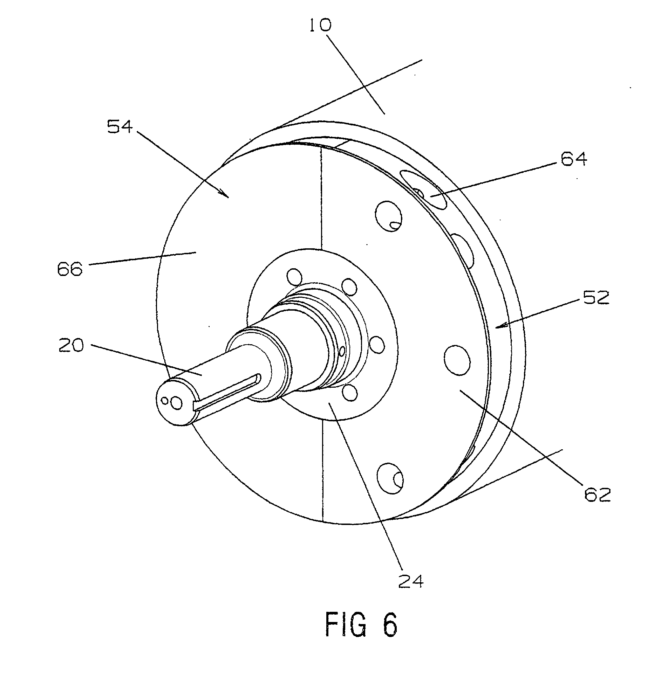

It will be understood that ink roll 10 is semi-permanently connected to adapter 52, and that journal 20 is permanently connected to adapter 54 which is permanently connected to the machine as previously described. Accordingly, the journal and the ink roll are as shown in FIG. 5. For connecting the ink roll to the journal, the ink roll may be simply moved horizontally to the left as shown by arrow A in FIG. 5, and bolts inserted through bores 64 and into threaded bores 78 of adapter 54. The ink roll and journal are then removably connected as shown in FIG. 6. Removal of the ink roll only requires that the bolts be removed, and the ink roll and adapter 52 may be disengaged as a one-piece unit and removed sideways from the machine in the reverse direction of arrow A. Adapter 52 may then be disconnected from the ink roll if it is to be used with the replacement ink roll to be inserted into the machine. Accordingly, the term "semi-permanently connected" is intended to mean that the ink roll and adapter 52 are removed and installed as a one-piece unit, and if an additional adapter 52 is available for the replacement ink roll, adapter 52 may remain permanently connected to the ink roll being removed.

It should be noted that there is a similar arrangement to that described above at the other end of the ink roll and at the other side of the machine. What is described herein with reference to one end of the ink roll and one side of the machine is applicable to the other end and side, both in construction and method of operation.

## Claims

1. In or for use in an apparatus, a device for removably mounting a cylinder, which device comprises:
a first support (12; 52) for connection to said cylinder (10);
a second support (24; 54) integral with, or adapted to be secured to, a journal (20) in said apparatus; and
a connecting means (44; 64, 78) for removably connecting said first support (12; 52) to said second support (24; 54), the arrangement being such that, in use, said connecting means (44; 64, 78) can be released to permit said first support (12; 52) to be removed from and inserted into said apparatus whilst said second support (24; 54) remains mounted thereon.

2. A device as claimed in claim 1, wherein said apparatus is a an apparatus for printing.

3. A device as claimed in claim 1 or 2, wherein said first support has a first surface (25) and said second support having a second surface (15), the arrangement being such that, in use, said first and second surfaces are held substantially in abutment by said connecting means.

4. A device as claimed in claim 1, 2 or 3, wherein, in use, on removal and insertion of said cylinder, said first and second surfaces are oriented in at least a substantially vertical plane.

5. A device as claimed in claim 1, 2, 3 or 4, wherein, in use, said first and second surfaces abut in at least a substantially vertical plane.

6. A device as claimed in any of claims 1 to 5, wherein said first support is adapted to accommodate at least a part of said second support.

7. A device as claimed in any preceding claim, wherein said connecting means comprises a plate (47), in use, removably mounted both on said first support and on said second support.

8. A device in as claimed in claim 7, wherein said plate (47) is sufficiently flexible to accommodate deviation in the dimensions of the first support and second support.

9. A device as claimed in any preceding claim, wherein said connecting means comprises at least one bolt (48).

10. A device as claimed in any preceding claim, further comprising guide means (28; 68) to assist in locating said first support with respect to said second support in said apparatus.

11. A device as claimed in claim 10, wherein said guide means comprises a housing (28) adapted to be mounted via first bearing means (26) on the journal of said apparatus.

12. A device as claimed in claim 11, wherein said housing is mounted on said first support via second bearing means (40).

13. A device as claimed in claim 11 or 12, wherein said housing comprises a removable cover element (28A) providing access to said connecting means for operation thereof.

14. Apparatus comprising a device as claimed in any preceding claim.

15. For use with an apparatus, a first support having any of or any combination of the first support features of any of claims 1 to 6 and 9.

16. For use with an apparatus, a second support having any of or any combination of the second support features of any of claims 1 to 6, 9 and 10.

17. A method of removably mounting a cylinder on an apparatus, for example an apparatus for printing, which method comprises the steps of:
(7) affixing a first support (12; 52) to said cylinder (10);
(8) affixing a second support (24; 54) to a journal (2) or providing a journal with a second support integral therewith;
(9) emplacing the first support and cylinder into said apparatus, said second support already mounted thereon; and
(10) releasably connecting said first and second supports with connecting means (44; 64, 78).

18. A method as claimed in claim 17, further comprising, to remove the cylinder, the steps of:
(11) releasing said connecting means; and
(12) removing said first support and said cylinder from said apparatus whilst said second support remains mounted on said apparatus.

19. An apparatus, for example an apparatus for printing, comprising a frame having a pair of journals mounted thereon, the apparatus being such that a cylinder can be mounted on and removed from said frame without removing said pair of journals therefrom.
